# EUROPEAN PATENT APPLICATION

(11) **EP 1 541 283 A1**
(43) Date of publication of application: **15.06.2005**
(21) Application number: 02807762.6
(22) Date of filing: 02.09.2002
(51) Int. Cl.: B24B 7/04

(54) **OPTICAL DISK POLISHING DEVICE**

(71) Applicant: ELM INC., Kaseda-shi, Kagoshima 897-0002 (JP)
(72) Inventor: MIYAHARA, Takakazu, Kaseda-shi, Kagoshima 897-0002 (JP); GENOZONO, Jiro, Kaseda-shi, Kagoshima 897-0002 (JP)
(74) Representative: HOEGER, STELLRECHT & PARTNER Patentanwälte
(86) International application number: PCT/JP2002/008904
(87) International publication number: WO 2004/022283

(57) **Abstract**

An apparatus for polishing an optical disk according to the present invention includes a flange 24 holding a polishing body 20 such as sandpaper, a backup member 21 interposed between the polishing body 20 and the flange 24, a rotation table 12 holding an optical disk 10 as a polished body, a pressing unit 28 for pressing the polishing body 20 against the optical disk 10 with a predetermined contact pressure required for polishing and motors 26 and 14 for rotationally driving the flange 24 and the rotation table 12 respectively. The backup member 21 is deformable within the range of 0.05 to 0.3 mm when pressed with the predetermined contact pressure, which makes it possible to substantially equalize the contact pressure of the polishing body 20 against the optical disk 10 on the entire polishing surface and to prevent the occurrence of roundness on the periphery of the optical disk.

## Description

### TECHNICAL FIELD

The present invention relates to an apparatus for polishing a reading surface of an optical disk, such as a CD or a DVD.

### BACKGROUND ART

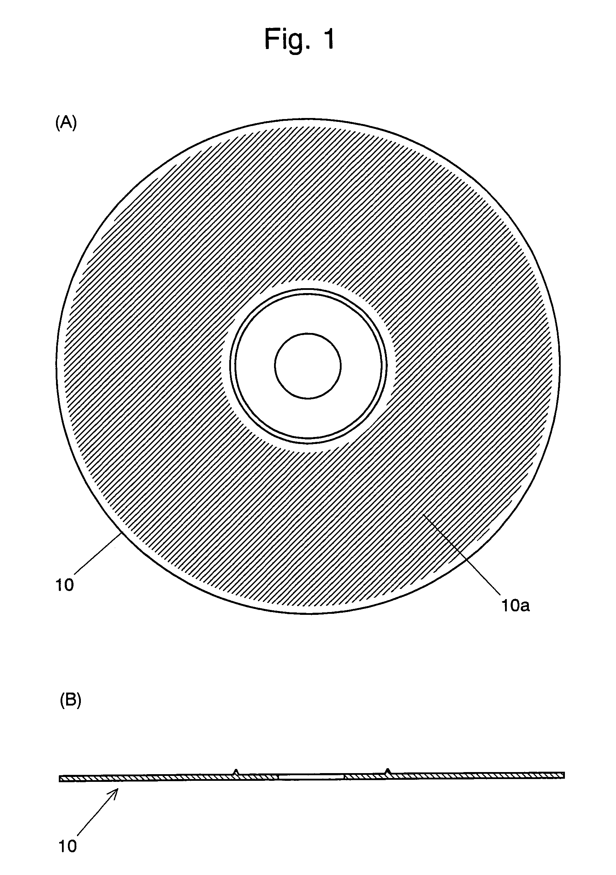

In the case of an optical disk, CD use for recording and distributing music or computer programs, widespread once, is giving way to the increasing use of DVD mainly to record and distribute video images. Fig. 1 shows an example of an optical disk recently used in large quantities. In Fig. 1, an optical disk 10 is made of transparent resin (which is "transparent" to light of a certain wavelength for the optical pickup but possibly opaque to others). It has a thickness of about 1.2 mm and a diameter of 120 mm, with a through-hole of diameter 15 mm located in the center. The other side of the reading surface of the optical disk 10 (in the case of a CD) or a layer located at about 0.6 mm below the reading surface (in the case of DVD) is used for recording information. Thus, a distance between the reading surface and the information layer in a DVD is about half as much as the corresponding distance in a CD. In addition to that, information signals for a DVD recording are more miniaturized and denser than those for a CD recording. It is therefore possible to record about eight times as much information on a DVD as on a CD.

The recorded information can be read by emitting a laser beam from the reading surface to the information layer and detecting light reflected by the information layer. Once the reading surface gets scratched, however, the recorded information cannot be correctly read because the pickup light is scattered by such scratches.

However, the scratches on the reading surface cause no damage to the information itself, which is not recorded directly on the reading surface. Therefore, attempts have been made to remove the scratches by polishing the reading surface so that the information can be read once again. A mirror-polishing technique is adopted for this purpose. In accordance, with this technique, a rough polish that uses a polishing body like sandpaper is followed by a finishing polish that uses liquid polishing solution (or compound) and a cloth or a sponge polishing body (which is called "buff") together. A planar recordation area for storing the information is within the range of about 22 to 58 mm from the center of the optical disk 10. Therefore, it is necessary to polish this particular area of the reading surface (which corresponds to the shaded area 10a of Fig. 1(A)) evenly and smoothly.

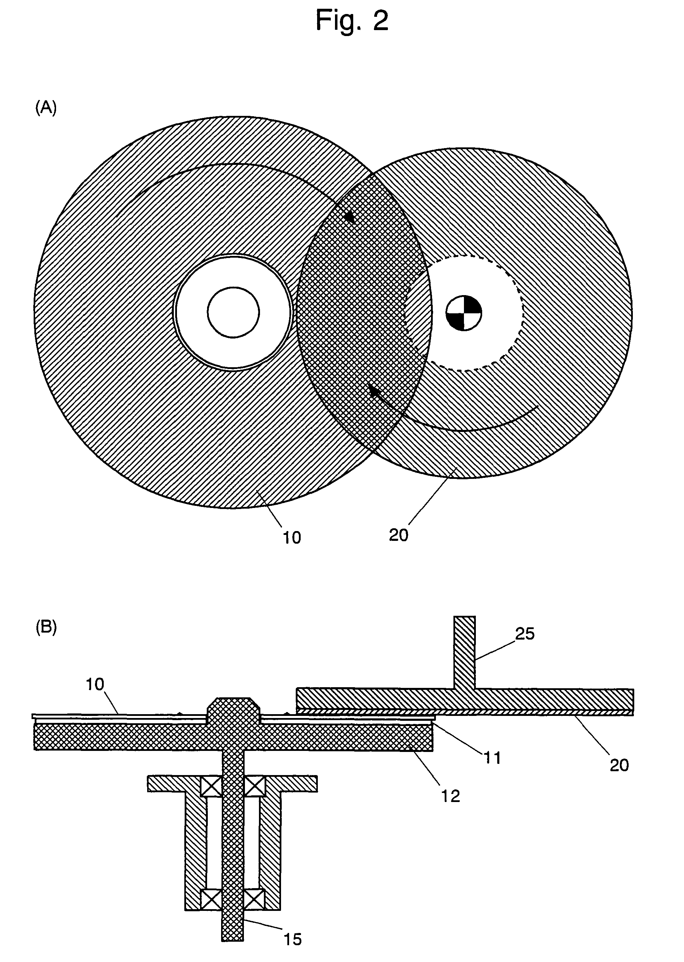

Fig. 2 shows an example of conventional polishing apparatuses. The polishing apparatus of Fig. 2 includes a disk rotator for rotating an optical disk 10, a polishing body rotator for rotating a circular or toroidal polishing body 20 (the toroidal shape is indicated by a dashed line of Fig. 2(A)), the diameter of which is almost the same as or smaller than that of the optical disk 10, and a driver for driving the rotators (not shown). The disk rotator rotates around a shaft 15 in one direction, and the polishing body rotator rotates around a shaft 25 in the same or opposite direction. Since friction thus occurs between the optical disk 10 and the polishing body 20, the reading surface of the optical disk 10 is polished by the polishing body 20.

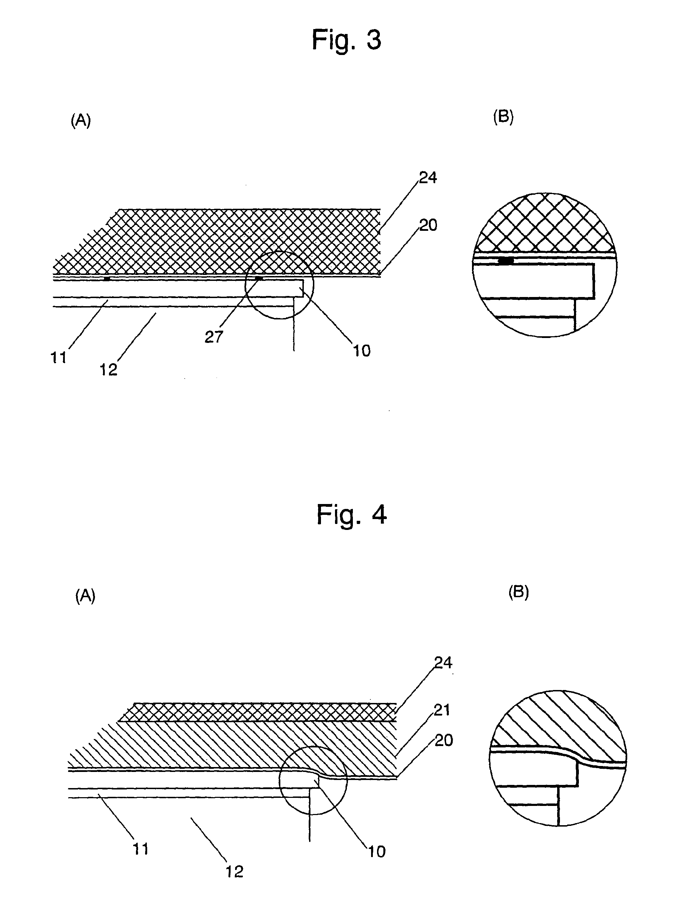

As shown in Fig. 3(A), the polishing body 20 is attached by a magnetic attachment/detachment means etc. (not shown) to the lower face of a flange 24 fixed to the shaft 25 of Fig. 2. In the conventional apparatus, when the surface of the polishing body 20 and the surface of the optical disk 10 are not adequately parallel to each other, one section gets high pressure but the other sections get almost no pressure due to the very high rigidity of the flange 24. The section under such high pressure is excessively polished and the others are inadequately polished. There is another problem that, when in polishing, abrasive filings and such 27 embedded between the polishing body 20 and the optical disk 10 are strongly pressed against the optical disk 10. This may cause deep scratches on the reading surface of the optical disk 10. Further, since the polishing body 20 floats up from the optical disk 10 due to the very high rigidity of the flange 24 as shown in Fig.3(B), the optical disk 10 is inadequately polished. Where the abrasive filings are embedded, the contact pressure of the polishing body 20 against the optical disk 10 is very high. This prevents the abrasive filings and such 27 from being easily ejected and therefore continues the above problem.

As shown in Fig. 4(A), an attempt has been made to attach the polishing body 20 to the lower face of the flange 24 via a soft backup member 21. If the surface of the optical disk 10 and the surface of the polishing body 20 are not adequately parallel to each other, or if the disk rotator and/or the polishing body rotator are/is not constructed to have adequate rigidity, the contact pressure of the polishing body 20 against the optical disk 10 is almost equal due to deformation of the backup member 21.

With such a soft backup member 21, the backup member 21 and the polishing body 20 attached thereto are deformed on the periphery of the optical disk 10. Such deformation causes "roundness (which means that the outer edge of the optical disk 10 is rounded)", as shown in Fig. 4(B). The roundness develops toward the inner periphery of the optical disk 10 with an increase in depth whenever it is polished. Therefore, the roundness is harmful to the reading of the information recorded in the optical disk 10. For DVD having a thinner cover layer than a CD, it is all the more harmful.

In view of the above problems, an object of the present invention is to provide an apparatus for polishing an optical disk that can prevent an occurrence of the roundness and substantially equalize the contact pressure.

### DISCLOSURE OF THE INVENTION

After active research on the above problems, the present inventors have invented an apparatus for polishing an optical disk that can prevent an occurrence of the roundness and substantially equalize the contact pressure. In the polishing apparatus where a polishing body is attached to a polishing body rotator via a buffer member, the buffer member is deformable within a specific range when the polishing body is pressed against a polished body with a predetermined contact pressure required for polishing.

Based upon the above knowledge, an apparatus for polishing an optical disk according to the present invention comprises:
a) a rotatable polished body holder for holding a polished body;
b) a rotatable polishing body holder for holding a polishing body;
c) a buffer member provided between the polishing body and the polishing body holder, which is deformable within the range of 0.05 to 0.3 mm when pressed with a predetermined contact pressure required for polishing;
d) a driver for rotationally driving the polishing body holder and/or the polished body holder; and
e) a pressing unit for pressing the polishing body holder and the polished body holder against each other.

In the apparatus for polishing an optical disk according to the present invention, the polishing body holder holds the polishing body via the buffer member, and the polished body holder holds such a polished body as an optical disk. The pressing unit presses the polishing body and the polished body against each other with a predetermined contact pressure. In the case of normal optical disks such as a CD or a DVD, the predetermined contact pressure, required for polishing the surface of the polished body, is approximately within the range of 3 to 20 kPa. If it is below the lower limit, the optical disk is inadequately polished or it takes too long to adequately polish the optical disk. On the other hand, if it is above the upper limit, there will be various problems due to unequal pressure or embedded abrasive filings, as described above.

With the polishing body and the polished body pressed against each other, the driver rotationally drives the polishing body holder and/or the polished body holder. When either of the holders is driven to rotate, the non-driven holder also rotates in the same direction. Here, provision is made for both the holders not to rotate coaxially. Since both the holders always rotate at a different speed at least in part, the polished body is thus polished by the polishing body. When both the holders are driven to rotate, provision is made for both the holders to rotate at a different speed. Both the holders may be rotated in the same or opposite direction. Thus, the polishing efficiency is increased.

The pressing unit is constructed thus: either the polished body holder or the polishing body holder is fixed, and the other holder is pressed against the fixed side holder. Alternatively, both the holders are pressed against each other.

The buffer member used in the present apparatus for polishing an optical disk is deformable within the range of 0.05 to 0.3 mm when the polishing body is pressed against the polished body with the contact pressure for the following reason. If the deformation amount is too large, the roundness harmful to the reading of information recorded in the polished body occurs just like the case of using the above soft backup member. On the other hand, if it is too small, there will be the same problems as are seen in the case of using the above flange of high rigidity. As a result of many experiments while making various changes in the thickness and/or hardness of the buffer member, the inventors have found that the polished body is best and most efficiently polished when the deformation amount is between 0.05 and 0.3 mm. It preferably ranges from 0.1 to 0.2 mm, whereby it is possible to polish the surface of the optical disk very efficiently and very well.

When the buffer member is deformable within the above range, the contact pressure of the polishing body against the polished body is almost equal. It is thus possible to polish the polished body evenly and smoothly and to prevent an occurrence of the roundness to such an extent that it causes no harm to the reading of the information recorded in the polished body.

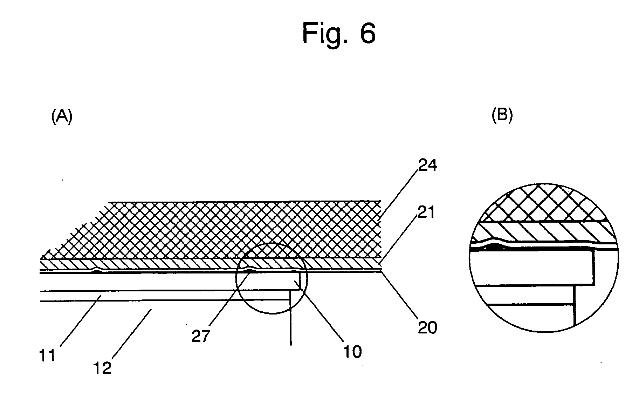

When the abrasive filings and such 27 are created between the optical disk 10 and the polishing body 20 through the polish as shown in Fig. 6(A), the entire polishing body 20 never floats up from the polished body 10, as shown in Fig. 6(B), for the following reason. The buffer member 21 and the polishing body 20 attached thereto are deformed and surrounds the intervening abrasive filings and such 27. Thus, the polished body 10 is adequately polished by the polishing body 20. Also, since the abrasive filings and such 27 do not get intensive and high contact pressure, there is no possibility that they cause deep scratches on the reading surface of the polished body 10. Further, since the abrasive filings and such 27 are not pressed very strongly, they are quickly ejected by the smooth movement between the polishing body 20 and the polished body 10.

For a frequently used DVD, where the distance between the reading surface and the information layer is about half as much as the corresponding distance in a CD, a further accurate (that is, even and smooth) polish is required as described above. Therefore, the present apparatus for polishing an optical disk is particularly preferable for the DVD polish.

### BRIEF DESCRIPTION OF THE DRAWINGS

Fig. 1 is a plan view (A) and a sectional view (B) of the optical disk.
Fig. 2 is a plan view (A) and a sectional view (B) of the conventional polishing apparatus.
Fig. 3 is a sectional diagram (A) showing a conventional relationship between the optical disk and the polishing body, and a partially enlarged view (B) of the (A).
Fig. 4 is a sectional diagram (A) showing another conventional relationship between the optical disk and the polishing body and a partially enlarged view (B) of the (A).
Fig. 5 is s perspective view (A) and a side view (B) of a polishing apparatus embodying the present invention.
Fig. 6 is a sectional diagram (A) showing a relationship between the optical disk and the polishing body in the polishing apparatus of Fig. 5, and a partially enlarged view (B) of the (A)

### BEST MODE FOR CARRYING OUT THE INVENTION

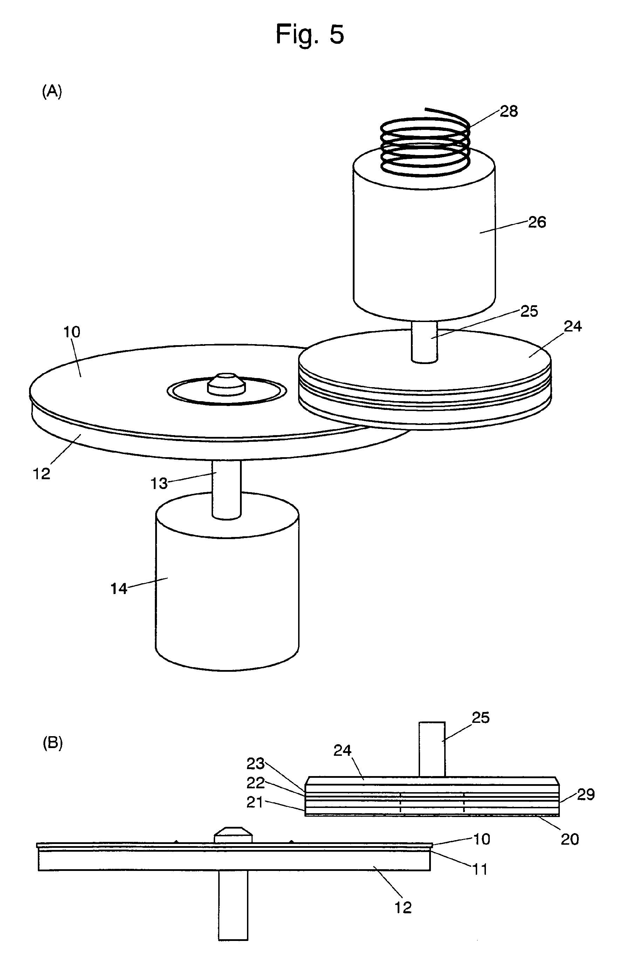

An apparatus for polishing an optical disk embodying the present invention is explained, refer to Fig. 5.

The above polishing apparatus includes a disk rotator, a polishing body rotator, and a pressing unit. The disk rotator includes a rotation table 12 and a motor 14 rotationally driving a rotation shaft 13 of the rotation table 12. An optical disk 10 is placed on the rotation table 12 (which corresponds to the above polished body holder). A pad 11 is interposed between the rotation table 12 and the optical disk 10. The pad 12 is used to prevent the optical disk 10 from slipping (or rotating) on the rotation table 12 when in polishing and to protect the surface of the optical disk 10 from the rotation table 12.

The polishing body rotator is located above the disk rotator. The polishing body rotator includes a discoid flange 24 and a motor 26 rotationally driving a rotation shaft 25 of the flange 24. A polishing body 20, such as sandpaper, is attached to the lower face of the flange 24 (which corresponds to the above polishing body holder) via a backup member 21 (which corresponds to the above buffer member) made of soft and resilient material.

For the backup member 21, any kind of material can be used as far as the above deformation amount is between 0.05 and 0.3 mm. For example, a urethane foam sheet of 1 to 2 mm in thickness is applicable.

The backup member 21 of the present embodiment, attachable/detachable to/from the flange 24, is attached to the lower face of the flange 24 by an attachment/detachment member 22 and 23. With the backup member 21 fixed directly to the lower face of the flange 24, the polishing body 20 may be attached to the backup member 21 so that it is attachable/detachable thereto/therefrom.

For the attachment/detachment member 22 and 23, a Hook-and-Loop fastener (e.g. "VELCRO" (registered trademark)), a double-sided adhesive tape, a magnetic attachment/detachment means, etc. can be used.

When the flange 24 and the backup member 21 are attached/detached to/from each other, and when the attachment/detachment member made of soft material, such as "VELCRO" (registered trademark), is in use, a rigid plate member 29 is interposed between the backup member 21 and the attachment/detachment member 22 and 23. This prevents the backup member 21 from being deformed locally. A polycarbonate plate of 1 mm in thickness, for example, can be used as the plate member 29. When the backup member 21 is attached directly to the flange 24 (that is, when the polishing body 20 is attached to the backup member 21 by adhesive agents etc. so that it is attachable/detachable thereto/therefrom), or when the flange 24 and the backup member 21 are attachable/detachable and yet the attachment/detachment member has adequate rigidity just like a magnetic attachment/detachment means, the plate member 29 is not necessary.

The apparatus for polishing an optical apparatus of the present embodiment includes a pressing unit 28, which is used to press the polishing body 20 attached to the polishing body rotator as described above against the optical disk 10. According to Fig. 5, the pressing unit 28 is provided on the polishing body rotator's side (i.e. at the back of the motor 26). But it may be provided on the disk rotator's side (i.e. at the back of the motor 14).

In the present embodiment, both the polishing body rotator and the disk rotator are provided with driving units (or motors 14 and 26) respectively. When either of them is provided with the driving unit, it is necessary to permit free rotation of the rotation shaft 13 or 25 of the rotator without the driving unit. According to Fig. 5, the rotation shaft 13/25 is directly driven to rotate by the motor 14/26 (direct-drive system). But a belt-drive system or a indirect-drive system is also applicable.

A method of polishing the reading surface of the optical disk 10 with the polishing apparatus of the present embodiment is explained. First, by loosening the pressing unit 28, the polishing body rotator is set apart from the disk rotator. Then, the optical disk 10 as a polished body is placed on the pad 11 of the rotation table 12, and the polishing body 20 with the backup member 21 is fixed to the lower face of the flange 24 by the attachment/detachment member 22 and 23. After that, the polishing body 20 is pressed against the optical disk 10 by the pressing unit 28. The pressure force is set so that the surface of the optical disk 10 is under a pressure of 3 to 20 kPa.

After pressed against each other as described above, the motors 14 and 26 of both the rotators are started. The motors 14 and 26 may be rotated in the same or opposite direction. Since friction thus occurs between the polishing body 20 and the optical disk 10, the reading surface of the optical disk 10 is polished by the polishing body 20.

## Claims

1. An apparatus for polishing an optical disk comprising:
a) a rotatable polished body holder for holding a polished body;
b) a rotatable polishing body holder for holding a polishing body;
c) a buffer member provided between the polishing body and the polishing body holder, which is deformable within the range of 0.05 to 0.3 mm when pressed with a predetermined contact pressure required for polishing;
d) a driver for rotationally driving the polishing body holder and/or the polished body holder; and
e) a pressing unit for pressing the polishing body holder and the polished body holder against each other with the predetermined contact pressure.

2. The apparatus for polishing an optical disk according to claim 1, wherein the deformation amount of the buffer member is between 0.1 and 0.2 mm.

3. The apparatus for polishing an optical disk according to claim 1 or 2, wherein a rigid member is provided between the buffer member and the polishing body holder.
